# EUROPÄISCHE PATENTSCHRIFT

(11) **EP 2 017 116 B1**
(45) Veröffentlichungstag und Bekanntmachung des Hinweises auf die Patenterteilung: **15.05.2013**
(21) Anmeldenummer: 08104172.5
(22) Anmeldetag: 30.05.2008
(51) Int. Cl.: B60K 35/00, B60Q 3/02

(54) **Verfahren zur Bedienungsunterstützung**
Method for operational support
Procédé destiné à la prise en charge de la commande

(30) Priorität: 17.07.2007 DE 102007033218
(43) Veröffentlichungstag der Anmeldung: 21.01.2009
(73) Patentinhaber: ROBERT BOSCH GMBH, 70442 Stuttgart (DE)
(72) Erfinder: Schoenherr, Michael, 70190 Stuttgart (DE); Heckel, Joerg, 71277 Rutesheim (DE)

(56) Entgegenhaltungen:
- EP-A- 0 675 018
- EP-A- 1 031 456
- EP-A2- 0 719 674
- WO-A-2008/054624
- DE-A1- 19 955 890
- DE-A1-102006 036 062

## Beschreibung

### Stand der Technik

Die Erfindung geht aus von einem Verfahren zur Bedienungsunterstützung oder einem Steuergerät nach Gattung der unabhängigen Ansprüche. Aus der DE 199 558 90 A1 ist bereits ein Verfahren und eine Vorrichtung zur Ausgabe von Bedienhinweisen in einem Fahrzeug bekannt, bei der eine Fahrerinformationsvorrichtung in einen Hilfezustand geschaltet und in dem Hilfezustand Bedienhinweise für die Fahrerinformationsvorrichtung nach Anforderung durch den Fahrer ausgegeben werden. Die Bedienhinweise werden dabei insbesondere in Textform über eine Anzeige oder über eine Sprachausgabe ausgegeben.

Aus der EP 675 018 A1 ist eine Informationsvorrichtung für bedienbare Geräte von Kraftfahrzeugen bekannt, bei der den Geräten individuell zugeordnete Bedienelemente eine Steuervorrichtung derart ansteuern, dass den Bedienelementen zugeordnete Daten auf einem Bildschrift dargestellt werden. In einer weiteren Ausgestaltung können Bedienelemente während der Betriebsart optisch dadurch hervorgehoben werden, dass sie allein oder heller beleuchtet werden. Ferner können zusammenhängende Bedienelemente, die zu einer Bedieneinheit zusammengefasst sind, gemeinsam oder durch einen beleuchteten Rahmen hervorgehoben werden, wenn die Funktion eines der Bedienelemente mittels des Bildschirms erläutert wird.

Aus der EP 0 719 674 A2, die den Oberbegriff des Auspruchs 1 definiert, ist eine Beleuchtung von Instrumenten und Einrichtungen in einem Kraftfahrzeug bekannt, bei der eine Lichtquelle in einem Innenspiegel des Fahrzeugs angeordnet ist, um Licht in den Innenraum des Kraftfahrzeugs und insbesondere auf Bedienelemente an der Instrumentafel abzustrahlen.

### Offenbarung der Erfindung

### Vorteile der Erfindung

Das erfindungsgemäße Verfahren mit den Merkmalen des unabhängigen Anspruchs hat demgegenüber den Vorteil, dass zur Unterstützung eines Nutzers von Bedienelementen in einem Fahrzeug ein oder mehrere Bedienelemente in Abhängigkeit von einer Anforderung durch den Nutzer, insbesondere den Fahrer, beleuchtet werden. In Folge der Beleuchtung können die Bedienelemente leicht aufgefunden werden. Selbst wenn ein Nutzer nicht weiß, welches Bedienelement im Fahrzeug betätigt werden muss, kann er nun in Folge des über die Beleuchtung gegebenen Hinweises das entsprechende Bedienelement leicht auffinden.

Erfindungsgemäß ist es vorteilhaft, an einem Fahrzeugdach eine Lichtquelle derart anzuordnen, dass sie zu einer selektiven Beleuchtung des einen oder der mehreren Bedienelemente ausgelegt ist. Hierdurch können die Bedienelemente in Auflicht angestrahlt werden, sodass auch bei einem helleren Umgebungslicht eine Beleuchtung der jeweiligen Bedienelemente erkennbar ist. Durch die eine zentrale Lichtquelle kann zudem ein Verdrahtungsaufwand vereinfacht werden.

Ferner ist es vorteilhaft, die Bedienelemente durch Lichtquellen in oder hinter den Bedienelementen selektiv zu beleuchten. Hierdurch sind insbesondere derartige Bedienelemente für eine Bedienungsunterstützung beleuchtbar, die in Auflicht schlecht beleuchtet werden können. Somit können auch beispielsweise Bedienelemente, die ihre Position im Fahrzeug ändern, wie beispielsweise an einem Lenkrad angeordnete Bedienelemente in Folge der Drehung des Lenkrads, in das erfindungsgemäße Verfahren zur Bedienungsunterstützung mit einbezogen werden.

Durch die in den abhängigen Ansprüchen aufgeführten Maßnahmen sind vorteilhafte Weiterbildungen und Verbesserungen des in dem unabhängigen Anspruch angegebenen Verfahrens möglich.

So ist es vorteilhaft, zusätzlich zu der Beleuchtung einen Hinweis zu dem einen oder den mehreren jeweils beleuchteten Bedienelementen mit weiteren Ausgabenmitteln auszugeben. Hierdurch kann zeitgleich zu einer selektiven Beleuchtung und damit zu einer Hervorhebung der jeweiligen Bedienelemente ein Bedienhinweis beispielsweise in gesprochener Form oder in Textform in einer Anzeige ausgegeben werden. Insbesondere bei einer Ausgabe einer Erläuterung einer Funktion eines Bedienelements mittels einer Sprachausgabe kann ein Benutzer in einem Fahrzeug leicht einen Bezug zwischen dem gerade hervorgehobenen, beleuchteten Bedienelement und der über die Sprachausgabe ausgegebenen Erläuterung herstellen.

Ferner ist es vorteilhaft, nach Anforderung einer Bedienungsunterstützung mehrere Bedienfunktionen und damit mehrere Bedienelemente nacheinander zu erläutern. Hierzu werden die Bedienelemente nacheinander durch eine Beleuchtung hervorgehoben. Damit ist es möglich, nach Anforderung einer entsprechenden Bedienungsunterstützung zahlreiche Funktionen des Fahrzeugs auf bequeme Weise zu erläutern. Insbesondere für ein erstmaliges Benutzen des Fahrzeugs kann somit eine Art Einführungskurs für einen mit dem Fahrzeug noch nicht vertrauten Benutzer gegeben werden. Hierdurch entfallen bei dem für den Benutzer neuen Fahrzeug gefährliche Fahrsituationen, die auf einem Suchen nach einem für den Benutzer unbekannten Bedienelement einer von ihm gewünschten Funktion des Fahrzeugs beruhen. Der Fahrer kann so mit mehr Sicherheit die verschiedenen Bedienfunktionen des für ihn neuen Fahrzeugs ausnutzen, ohne dass zuvor ein Studium einer gegebenenfalls recht umfangreichen Bedienungsanleitung erforderlich wird.

Eine Benutzeranforderung zur Ausgabe einer Bedienungsunterstützung kann vorteilhaft durch ein gesondertes Bedienelement angefordert werden. Dieses Bedienelement kann beispielsweise gesondert beleuchtet werden. So kann ein Fahrer auch ohne Kenntnisse des Fahrzeugs dieses Bedienelement leicht auffinden, beispielsweise durch eine entsprechende symbolhafte Hervorhebung oder durch eine entsprechende Text bzw. ergänzende Sprachausgabe.

Ferner ist es erfindungsgemäß vorteilhaft eine Bedienungsunterstützung in Abhängigkeit von einem Fahrzeugzustand automatisch anzubieten, beispielsweise bei einer Fahrzeugfehlfunktion oder bei einem möglicherweise nicht gewünschten Fahrzeugzustand. Nach Anforderung einer Bedienungsunterstützung können das oder diejenigen Bedienelemente beleuchtet werden, die zu bedienen sind, um dem Fahrzeugfehler entgegenzuwirken bzw. um den möglicherweise unerwünschten Fahrzeugzustand zu beseitigen.

### Kurze Beschreibung der Zeichnungen

Ausführungsbeispiele der Erfindung sind in den Zeichnungen dargestellt und in der nachfolgenden Beschreibung näher erläutert. Es zeigen
Figur 1 eine schematische Darstellung eines erfindungsgemäßen Steuergeräts zur Durchführung eines erfindungsgemäßen Verfahrens zur Bedienungsunterstützung in einem Fahrzeug,
Figur 2 eine Ansicht auf einen vorderen Passagierbereich in einem Fahrzeug zur Durchführung des erfindungsgemäßen Verfahrens zur Bedienungsunterstützung.

### Ausführungsformen der Erfindung

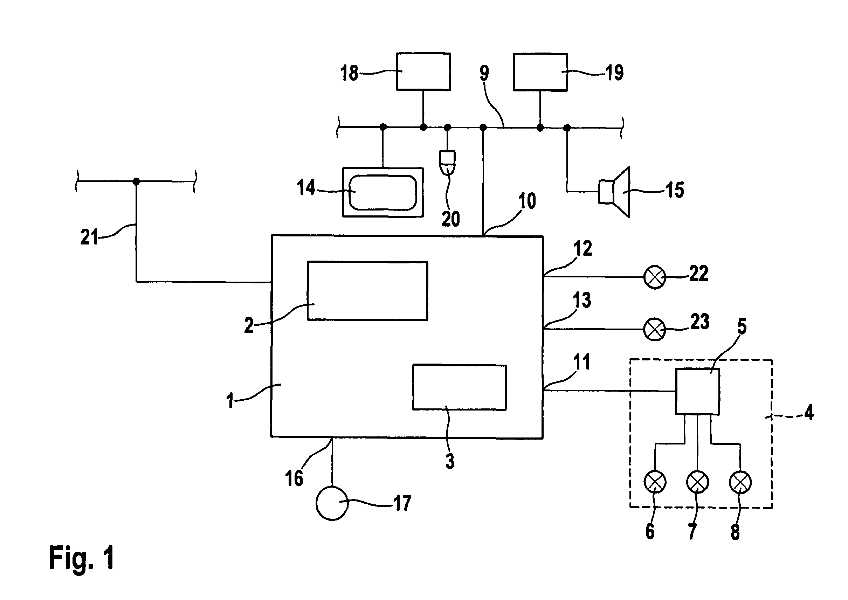

In der Figur 1 ist ein Steuergerät 1 dargestellt, dass zur Durchführung eines erfindungsgemäßen Verfahrens einer Bedienungsunterstützung in einem Fahrzeug dient. Hierzu weist das Steuergerät 1 eine Recheneinheit 2 auf, die dazu ausgelegt ist, verschiedene Lichtquellen anzusteuern, die an das Steuergerät 1 angeschlossen sind. Welche Lichtquellen unter welchen Bedingungen angesteuert werden, ist in einem Speicher 3 abgelegt. Die hierfür in dem Speicher 3 abgelegten Zuordnungsdaten sind spezifisch auf den jeweiligen Fahrzeugtyp ausgelegt, in dem das Steuergerät 1 angeordnet ist. Hierbei werden auch eventuelle Sonderausstattungen des jeweiligen Fahrzeugs berücksichtigt. Entsprechende Informationen können bei der Herstellung des Steuergeräts in dem Speicher 3 abgelegt werden, können aber auch bei der Montage oder während des Fahrzeugbetriebs dem Steuergerät 1 zugeführt werden. Entsprechend ist auch eine spätere Änderung oder Ergänzung bei einer späteren Änderung der Fahrzeugausstattung möglich. In dem Speicher 3 sind die Funktionen des Fahrzeugs und die zu deren Auslösung erforderlichen Bedienelemente und in einer weiteren Ausführungsform auch deren Position im Fahrzeug einander zugeordnet abgelegt.

Zur Durchführung einer Beleuchtung von Bedienelementen ist in einer ersten Ausführungsform an eine erste Schnittstelle 11 des Steuergerätes 1 eine Beleuchtungseinheit 4 angeschlossen. Die Beleuchtungseinheit 4 weist eine Steuereinrichtung 5 auf, die wiederum mehrere Lichtquellen 6, 7, 8 ansteuert. Die Beleuchtungseinheit 4 ist dabei derart in dem Fahrzeug angeordnet, dass durch sie mehrere Bedienelemente des Fahrzeugs selektiv beleuchtbar sind. Die selektive Beleuchtbarkeit wird beispielsweise dadurch hergestellt, dass eine oder mehrere der Lichtquellen 6 ,7 ,8 angesteuert werden und diese jeweils Licht selektiv auf bestimmte Bedienelemente abstrahlen. In einer Ausführungsform sind hierzu die Lichtquellen 6, 7, 8 mit einer zugehörigen, in der Figur 1 nicht im Detail gezeigten Lupenoptik ausgeführt, die das Licht der Lichtquellen 6, 7, 8 auf die jeweiligen Bedienelemente bündeln. In einer Ausführungsform ist die Beleuchtungseinheit 4 an einem Fahrzeugdach des Fahrzeugs angeordnet. Sie kann hierbei beispielsweise zentral in der Mitte des Fahrzeugs vorgesehen sein, um insbesondere Bedienelemente in einem Bereich der Mittelkonsole zu beleuchten. In einer anderen Ausführungsform kann sie oberhalb des Fahrers angeordnet sein, sodass Bedienelemente links und rechts des Fahrers an der Instrumententafel beleuchtet werden können. Jedoch sind auch noch andere Montageorte möglich. In einer weiteren Ausführungsform können die Lichtquellen 6, 7, 8 auch als Leuchtdioden ausgeführt sein, die unmittelbar bereits über eine in dem Leuchtdiodenaufbau vorgesehene Optik verfügen. In einer weitern Ausführung können die Lichtquellen 6, 7, 8 auch als Laserlichtquellen ausgeführt sein, die Licht in Richtung der Bedienelemente abstrahlen. In einer besonderen Ausführung ist die Beleuchtungseinheit 4 auch zusätzlich dazu ausgelegt, ein virtuelles Bild auf einer Windschutzscheibe des Fahrzeugs zu erzeugen. Somit kann in diesem Fall eine Projektionseinheit zur Erzeugung eines virtuellen Bildes auf der Windschutzscheibe auch für eine erfindungsgemäße Beleuchtung von Bedienelementen im Fahrzeug mit verwendet werden.

Ergänzend hierzu können an weiteren Schnittstellen des Steuergerätes 1 auch jeweils weitere Lichtquellen zur selektiven Beleuchtung von Bedienelementen im Fahrzeug angeschlossen sein. In dem in der Figur 1 gezeigten Ausführungsbeispiel ist an einer zweiten Schnittstelle 12 eine zweite Beleuchtungseinheit 22 und an einer dritten Schnittstelle 13 eine dritte Beleuchtungseinheit 23 angeordnet. Die weiteren Beleuchtungseinheiten 22, 23 können beispielsweise auf einer Rückseite oder im Inneren von Bedienelementen angeordnet sein, beispielsweise in einem Lenkrad oder in einem Lenkstockschalter, aber auch jeweils hinter Bedienelementen in der Instrumententafel. In einer ersten Ausführungsform sind zusätzlich zu herkömmlichen Lichtquellen, die die Bedienelemente für eine Nachtfahrt beleuchten, weitere Lichtquellen hinter bzw. in den Bedienelementen vorgesehen, die zusätzlich selektiv angesteuert werden, wenn dies für eine Bedienungsunterstützung erforderlich ist. In einer weiteren Ausführungsform ist es aber auch möglich, für eine selektive Beleuchtung bereits vorhandene Lichtquellen zur Beleuchtung von Bedienelementen zu verwenden. Hierzu wird der durch eine für eine herkömmliche Beleuchtung vorhandene Lichtquelle getriebene Strom gegenüber einem Normalbetrieb vergrößert, sodass bei einer selektiven Beleuchtung der jeweiligen Bedienelemente die hervorgehobenen Bedienelemente heller als andere Bedienelemente erscheinen. Ferner ist es auch möglich, anstelle einer helleren Beleuchtung eine farblich andere Beleuchtung vorzusehen. In einer weiteren Ausführungsform ist es auch möglich, eine Hervorhebung eines entsprechenden Bedienelementes durch eine Beleuchtung dadurch zu erreichen, dass das hervorgehobene Bedienelement eine blinkende Beleuchtung hat, während andere Bedienelemente konstant beleuchtet werden.

Werden ein oder mehrere Bedienelemente durch eine gesonderte Beleuchtung hervorgehoben, ist es vorteilhaft möglich, ergänzende Informationen zu den hervorgehobenen Bedienelementen über eine Anzeige 14 und/oder über einen Lautsprecher 15 auszugeben. Zur Ausgabe ist das Steuergerät 1 in einer in der Figur 1 gezeigten Ausführungsform über eine Schnittstelle 10 an einen Multimediabus 9 angeschlossen. In einer anderen Ausführungsform können die Anzeige und/oder der Lautsprecher aber auch unmittelbar an das Steuergerät 1 angeschlossen sein. Werden entsprechende Bedienelemente beleuchtet, so wird in der Anzeige 14 bzw. über den Lautsprecher 15 mittels einer Text- bzw. Sprachausgabe die Funktion des entsprechenden Bedienelements ausgegeben. Ferner kann aber auch ein Hinweis ausgegeben werden, auf welche Weise das entsprechende Bedienelement zu bedienen ist. Die Anzeige 40 kann beispielsweise als eine Bildschirmanzeige, beispielsweise eine Flüssigkristallanzeige, ausgeführt sein. In einer weiteren Ausführungsform kann die Anzeige jedoch auch als ein Head-up-Display ausgeführt sein, bei dem ein virtuelles Bild mittels einer Projektion auf die Windschutzscheibe 38 erzeugt wird.

Eine Ausgabe einer Bedienungsunterstützung durch ein Beleuchten von Bedienelementen erfolgt in Abhängigkeit von einer Anforderung durch einen Nutzer. In einer ersten Ausführungsform ist hierzu an eine Schnittstelle 16 des Steuergeräts 1 ein gesondertes Bedienelement 17 angeschlossen. Das gesonderte Bedienelement 17 ist beispielsweise als eine Drucktaste ausgeführt. Diese Drucktaste ist beispielsweise durch ein darauf angeordnetes Fragezeichensymbol gekennzeichnet. In einer besonderen Ausführungsform wird diese Drucktaste bei einem Öffnen der Fahrzeugtüre unmittelbar beleuchtet bzw. es erfolgt ein Texthinweis auf das Bedienelement "bei Fragen zur Fahrzeugbedienung bitte die Fragezeichen-Taste drücken".

In einer weiteren Ausführungsform können für eine Anforderung einer Bedienungsunterstützung aber auch andere Bedienelemente im Fahrzeug verwendet werden, beispielsweise Bedienelemente 18, 19, die an den Multimediabus 9 angeschlossen sind. Ferner können die Bedienelemente auch in anderer Weise mit dem Steuergerät 1 verknüpft sein. Die Bedienelemente 18, 19 dienen einer Steuerung verschiedener Fahrzeugfunktionen, beispielsweise der Lichteinstellung, der Scheinwerfersteuerung, der Klimaregelung, der Fahrzeugnavigation oder der Musikwiedergabe-Einstellung. Durch eine Betätigung einer der Bedienelemente, gegebenenfalls auch in Zusammenhang mit einem Betätigen des Bedienelements 17, kann eine entsprechende Beleuchtung von zugehörigen Bedienelementen, gegebenenfalls auch mit einer Erläuterung der zugehörigen Funktion, ausgelöst werden.

In einer weiteren Ausführungsform kann auch ein Mikrofon 20 beispielsweise über den Multimediabus 9 mit dem Steuergerät 1 verknüpft sein. Über das Mikrofon 20 kann über eine Spracheingabe eine entsprechende Bedienungsunterstützung angefordert werden.

In einer weiteren Ausführungsform ist ferner ein Fahrzeugdatenbus 21, beispielsweise ein CAN-Bus, mit dem Steuergerät 1 verbunden. Über den Fahrzeugdatenbus 21 können Fahrzeugeinstellungen und/oder Fahrzeugfehlfunktionen an das Steuergerät 1 übertragen werden. Werden Fahrzeugfunktionen ergänzt oder ausgetauscht, so kann beispielsweise über den Fahrzeugdatenbus 21 das Steuergerät 1 umprogrammiert und insbesondere der Inhalt des Speichers 3 ergänzt oder ausgetauscht werden. Die Recheneinheit 2 entscheidet im Zugriff auf den Speicher 3, ob einem Benutzer eine entsprechende Bedienungsunterstützung bei einer vorliegenden Fahrzeugfehlfunktion oder einer bestimmten Fahrzeugeinstellung angeboten werden soll. Ein Benutzer wird auf eine entsprechende Ausgabe beispielsweise über eine Sprachausgabe über den Lautsprecher 15 oder über eine entsprechende optische Darstellung in der Anzeige 14 hingewiesen. Der Benutzer kann nun über eine Betätigung des Bedienelements 17 oder über eine entsprechende andere Eingabe die auf den Fahrzeugfehler bezogene Bedienungsunterstützung anfordern.

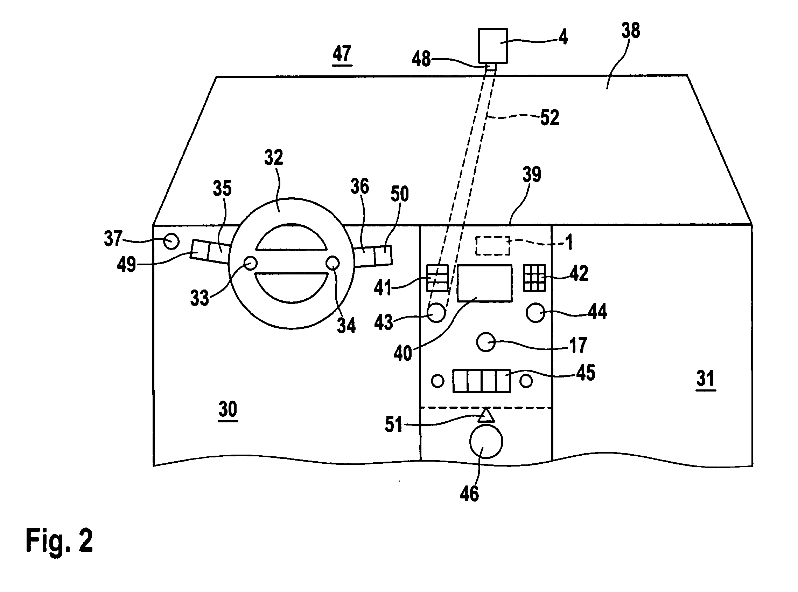

In der Figur 2 ist ein vorderer Bereich eines Fahrzeugs mit einem Fahrerbereich 30 und einem Beifahrerbereich 31 dargestellt. In dem Fahrerbereich 30 befindet sich ein Lenkrad 32, das Bedienelemente 33, 34 aufweist. Links und rechts neben dem Lenkrad 32 sind jeweils Lenkstockschalter 35, 36 angeordnet. An der Instrumententafel ist links neben dem Lenkrad ein weiteres Bedienelement 37 vorgesehen. Unterhalb einer Windschutzscheibe 38 des Fahrzeugs ist ferner eine Mittelkonsole 39 vorgesehen, die eine Vielzahl von Bedienelementen aufweist. Links neben einer Anzeige 40 ist ein Tastenfeld 41 vorgesehen. Ebenso ist rechts von der Anzeige 40 ein weiteres Tastenfeld 42 vorgesehen. Unterhalb der Tastenfelder 41, 42 sind jeweils Drehgeber 43, 44 vorgesehen. Ein weiteres Tastenfeld 45 ist in einem unteren Bereich der Mittelkonsole angeordnet. Das Bedienelement 17 ist als eine Drucktaste zwischen der Anzeige 40 und dem unteren Tastenfeld 45 angeordnet. Ein weiteres Drehelement 46 ist in einer weiteren Ausführungsform im Bereich eines Mitteltunnels im Fahrzeug vorgesehen. An einem Fahrzeugdach 47 ist eine Beleuchtungseinheit 4 vorgesehen, die eine Lupenoptik 48 aufweist. Durch die Lupenoptik 48 ist ein selektives Beleuchten von Bedienelementen möglich. In der hier gezeigten Ausführungsform wird der Drehgeber 43 durch eine entsprechende Lichtbündelung mittels der Lupenoptik 48 selektiv beleuchtet, wobei die Lichtstrahlen 52 gestrichelt dargestellt sind. Auch die anderen Bedienelemente im Bereich der Mittelkonsole können durch die Beleuchtungseinheit 4 selektiv beleuchtet werden. Die Beleuchtungseinheit 4 kann in einer anderen Ausführungsform auch durch eine andere Beleuchtungseinheit, beispielsweise durch eine Laserlichtquelle, ersetzt werden. Andere Bedienelemente insbesondere die Bedienelemente 33, 34 an dem Lenkrad 32, aber auch die Lenkstockschalter 35, 36 sowie das Bedienelement 37 links neben dem Lenkrad 32 sind vorzugsweise von ihrer Rückseite bzw. von ihrem Inneren aus beleuchtbar. So können beispielsweise die Lenkstockschalter 35, 36 Drehgeber 49, 50 aufweisen, die selektiv von innen beleuchtbar sind. Das Steuergerät 1, das in der Figur 2 gestrichelt dargestellt ist, ist beispielsweise in einem Bereich der Mittelkonsole 39 des Fahrzeugs angeordnet.

In einer ersten Ausführungsform erfolgt eine erfindungsgemäße Bedienungsunterstützung in der Weise, dass einem Fahrer eines Fahrzeugs nach Anforderung alle Fahrzeugfunktionen erläutert werden. Eine entsprechende Einführung in die Fahrzeugbedienung erfolgt beispielsweise über ein Drücken des Bedienelements 17. Das Bedienelement 17 ist hierzu beispielsweise mit einem Fragezeichen gekennzeichnet und ist bei einem Öffnen der Fahrzeugtüre oder bei einem Einschalten der Zündung gesondert gekennzeichnet, sodass ein Fahrer erkennen kann, dass er über eine Betätigung des entsprechenden Bedienelements eine Bedienungsunterstützung erhalten kann. Hierzu ist das Bedienelement bevorzugt heller als andere Bedienelemente beleuchtet, wird von der Beleuchtungseinheit 4 angestrahlt oder blinkt. Entsprechend kann eine akustische Ausgabe für den Fall erfolgen, dass ein helles Umgebungslicht eine gesonderte Hervorhebung des Bedienelements 17 erschwert.

Hat ein Benutzer das Bedienelement 17 betätigt, werden dem Fahrer nacheinander die Funktionen der übrigen Bedienelemente im Fahrzeug erläutert. Hierzu werden die Bedienelemente jeweils gesondert beleuchtet, wobei ergänzende Informationen über einen in der Figur 2 nicht gezeigten Lautsprecher und/oder über die Anzeige 40 ausgegeben werden. So wird dem Fahrer beispielsweise das Bedienfeld 41 erläutert, das zur Steuerung einer Fahrerinformationseinrichtung dient. Der Drehgeber 43 und der Drehgeber 44 dienen jeweils zur Auswahl von Hauptfunktionen oder zur Feineinstellung der Fahrerinformationseinrichtung. Ein Tastenfeld 42 dient zur Eingabe von Ziffern oder Buchstaben. Ein Bedienelement 45 dient zur Klimaregelung. Ein Drehgeber 46 dient gegebenenfalls weiteren Fahrzeugfunktionen. Die einzelnen Bedienfelder werden von der Beleuchtungseinheit 4 nacheinander beleuchtet, wobei die zugehörigen Informationen über die Bedienfelder, auswählbare Funktionen und/oder vorzunehmende Bedienreihenfolgen von Bedienelementen an den Fahrer ausgegeben werden. Nach Abschluss der Erläuterung der Mittelkonsole wird beispielsweise eine Erläuterung anhand der Lenkstockschalter 35, der einer Lichteinstellung der Blinkerregelung dient, und dem Lenkstockschalter 36, der der Scheinwerfersteuerung dient, fortgesetzt. Die Drehgeber 43, 44 dienen beispielsweise einer Temporegelung, ein Bedienelement 37 einer Leuchtweitenregulierung. Die Bedienelemente in dem Lenkrad, sowie die Lenkstockschalter des Bedienelements 37 werden dabei nicht von der Beleuchtungseinheit 4 hervorgehoben, sondern sie werden durch Lichtquellen in oder hinter den Bedienelementen, beispielsweise Leuchtdioden, gesondert beleuchtet, beispielsweise heller, blinkend oder in einer anderen Farbe als andere Bedienelemente. Durch ein erneutes Drücken des Bedienelements 17 oder durch ein Starten des Motors kann beispielsweise die Erläuterung der Bedienelemente im Fahrzeug abgebrochen werden. In einer weiteren Ausführungsform kann eine Bedienungsunterstützung in Form einer aufeinanderfolgenden Erläuterung einer Vielzahl von Fahrzeugfunktionen auch über eine Spracheingabe angefordert werden, beispielsweise über eine Aufforderung " Funktionserläuterung" oder "Betriebsanleitung".

In einer weiteren Ausführungsform ist es aber auch möglich, einzelne Funktionen gezielt zu erläutern. Wird beispielsweise über eine Spracheingabe die Frage eingegeben "Wie erfolgt die Klimaregelung ?" dann wird von der Beleuchtungseinheit 4 das Bedienfeld 45 beleuchtet. Wird die Frage eingegeben "Wie gebe ich ein Fahrziel ein?" werden die Bedienfelder 41, 42 und die Drehgeber 43, 44 beleuchtet. Zugleich wird in der Anzeige dargestellt, welche Menübefehle zur Eingabe eines Fahrziels in eine Navigationsvorrichtung eingegeben werden müssen. Ferner kann auch über ein Drücken des im vorliegenden Ausführungsbeispiel als Taste ausgebildeten Bedienelements 17 und durch ein Antippen beispielsweise des Drehgebers 43 eine Erläuterung zu denjenigen anderen Bedienfeldern erfolgen, die mit dem Drehgeber 43 zusammenwirken. Ist keine besondere Funktion spezifiziert worden, so kann automatisch ein Bedienelement vorgegeben sein, das erläutert werden soll, beispielsweise ein Bedienelement zum Starten des Fahrzeugs.

Um zwischen einer Anforderung einer einzelnen Erläuterung und einer Gesamt-Erläuterung bei einer Anforderung über die Drucktaste des Bedienelements 17 zu unterscheiden, können in Abhängigkeit von der Bedienung der Drucktaste jeweils eine Einzel- oder eine Gesamt-Erläuterung von Funktionen erfolgen. So kann beispielsweise bei einem andauernden Betätigen von mehr als 2s die Gesamt-Erläuterung gestartet werden, ansonsten wird nur eine Einzel-Erläuterung ausgegeben.

In einer weiteren Ausführungsform können auch fahrzustandsspezifische Hinweise ausgegeben werden. Wird beispielsweise von einem in der Figur 2 nicht gezeigten Sensor, beispielsweise einen Regensensor, eine Vereisung der Windschutzscheibe 38 festgestellt, so kann der Fahrer nach einer entsprechenden Anforderung einer Bedienungsunterstützung mittels einer Beleuchtung des Klimabedienfeldes aufgefordert werden, eine Entfroster-Lufteinstellung vorzunehmen. Ferner kann beispielsweise bei einer festgestellten Aktivierung des Fernlichtes oder bei einem versehentlich bei geparktem Zustand gesetzten Blinker der Lenkstockschalter 35 beleuchtet werden, um einen Fahrer auf die Licht- bzw. Blinkereinstellungen hinzuweisen. Entsprechend können ergänzende Hinweise über den Lautsprecher 15 bzw. die Anzeige 40 ausgegeben werden. Liegt ein Fahrzeugfehler vor, beispielsweise ein Absinken des Reifendrucks oder eine Fehlermeldung eines Motorsteuergeräts, kann ein Fahrer beispielsweise aufgefordert werden, die Lautstärke des Radios über den Drehgeber 44 zu senken, der dann beleuchtet wird. Hierdurch ist es dem Fahrer dann möglich gegebenenfalls ein auftretendes Störgeräusch oder ein Geräusch des Reifenrollens besser wahrzunehmen. Im Falle eines Verlustes der Antriebsleistung oder einer anderen kritischen Störung des Fahrzeugs kann beispielsweise die Lichtquelle einen Schalter 51 zum Betätigen einer Warnblinkanlage hervorheben, damit der Fahrer diesen leicht auffinden kann.

Neben den in der Figur 2 gezeigten Bedienelementen können auch weitere Bedienelemente oder Lichtquellen im Fahrzeug für eine selektive Beleuchtung von Bedienelementen herangezogen werden, beispielsweise Lichtquellen in Schaltern an der Fahrzeugtüre oder Lichtquellen an Türgriffen.

## Patentansprüche

1. Verfahren zur Bedienungsunterstützung in einem Fahrzeug, wobei eine Bedienungsunterstützung von einem Benutzer angefordert wird, wobei zur Bedienungsunterstützung abhängig von der Anforderung ein oder mehrere Bedienelemente (35, 36, 37, 41, 42, 43, 44, 45, 46, 51) beleuchtet werden, wobei eines der oder mehrere Bedienelemente (41, 42, 43, 44, 45, 46, 51) von einer an einem Fahrzeugdach (47) angeordneten Lichtquelle (4, 6, 7, 8) selektiv beleuchtet werden, **dadurch gekennzeichnet, dass** weitere Bedienelemente (35, 36) durch in einem Inneren oder auf einer Rückseite der Bedienelemente (35, 36) angeordnete Lichtquellen (22, 23) beleuchtet werden.

2. Verfahren nach Anspruch 1, **dadurch gekennzeichnet, dass** zusätzlich ein Hinweis zu dem einen oder zu den mehreren jeweils beleuchteten Bedienelementen mittels einem oder mehreren, weiteren Ausgabemitteln (14, 15) akustisch und/oder optisch ausgegeben wird.

3. Verfahren nach einem der vorhergehenden Ansprüche, **dadurch gekennzeichnet, dass** die Benutzeranforderung über eine Betätigung eines hierfür vorgesehenen Bedienelements oder über eine Spracheingabe angefordert wird.

4. Verfahren nach einem der vorhergehenden Ansprüche, **dadurch gekennzeichnet, dass** eine Bedienungsunterstützung in Abhängigkeit von einem Fahrzeugzustand angeboten wird.

## Claims

1. Method for providing operator control assistance in a vehicle, wherein operator control assistance is requested by a user, wherein, in order to provide operator control assistance, one or more operator controls (35, 36, 37, 41, 42, 43, 44, 45, 46, 51) are illuminated as a function of the request, wherein one or more operator controls (41, 42, 43, 44, 45, 46, 51) are selectively illuminated by a light source (4, 6, 7, 8) arranged on a vehicle roof (47), **characterized in that** further operator controls (35, 36), are illuminated by light sources (22, 23) arranged in an interior space or on a rear side of the operator controls (35, 36).

2. Method according to Claim 1, **characterized in that** in addition a reference to the one or more respectively illuminated operator controls is output acoustically and/or optically by means of one or more further output means (14, 15).

3. Method according to one of the preceding claims, **characterized in that** the user request is requested by activating an operator control provided for this purpose or by means of a voice input.

4. Method according to one of the preceding claims, **characterized in that** operator control assistance is offered as a function of a state of the vehicle.

## Revendications

1. Procédé d'assistance à la commande dans un véhicule, dans lequel
une assistance à la commande est demandée par l'utilisateur,
un ou plusieurs éléments de commande (35, 36, 37, 41, 42, 43, 44, 45, 46, 51) sont éclairés pour l'assistance à la commande en fonction de la demande et
un ou plusieurs des éléments de commande (41, 42, 43, 44, 45, 46, 51) sont éclairés sélectivement par une source de lumière (4, 6, 7, 8) disposée sur le plafond (47) du véhicule,
**caractérisé en ce que**
d'autres éléments de commande (35, 36) sont éclairés par des sources de lumière (22, 23) disposées à l'intérieur ou sur le côté arrière des éléments de commande (35, 36).

2. Procédé selon la revendication 1, **caractérisé en ce qu'**une indication concernant le ou les éléments de commande particuliers éclairés est délivrée par voie acoustique et/ou optique au moyen d'un ou plusieurs autres moyens d'émission (14, 15).

3. Procédé selon l'une des revendications précédentes, **caractérisé en ce que** la demande de l'utilisateur est effectuée par l'actionnement d'un élément de commande prévu dans ce but ou par introduction vocale.

4. Procédé selon l'une des revendications précédentes, **caractérisé en ce que** l'assistance à la commande est demandée en fonction de l'état du véhicule.
